# EUROPÄISCHE PATENTANMELDUNG

(11) **EP 4 455 809 A1**
(43) Veröffentlichungstag der Anmeldung: **30.10.2024**
(21) Anmeldenummer: 23169374.8
(22) Anmeldetag: 24.04.2023
(51) Int. Cl.: G05B 19/404, B23Q 39/02, G05B 19/18

(54) **STEUERUNG EINER MEHRSPINDEL-WERKZEUGMASCHINE**

(71) Anmelder: Siemens Aktiengesellschaft, 80333 München (DE)
(72) Erfinder: Alkafafi, Loay, 91058 Erlangen (DE); Rack, Philip Joachim, 70197 Stuttgart, S-West (DE); Spielmann, Ralf, 70569 Stuttgart (DE)
(74) Vertreter: Siemens Patent Attorneys

(57) **Zusammenfassung**

Zur Steuerung einer Mehrspindel-Werkzeugmaschine (1), welche eine erste Werkzeugspindel (2a, 2b) und eine davon unabhängig steuerbare zweite Werkzeugspindel (2a, 2b) aufweist, werden ein erstes Werkstück (5a, 5b) und ein zweites Werkstück (5a, 5b) bearbeitet, indem ein Teileprogramm synchronisiert in zwei Bearbeitungskanälen abgearbeitet wird. Die Abarbeitung des Teileprogramms beinhaltet eine Ansteuerung erster Maschinenachsen zur Führung der ersten Werkzeugspindel (2a, 2b) gemäß einer ersten Werkzeugbahn und die Abarbeitung des Teileprogramms beinhaltet eine Ansteuerung zweiter Maschinenachsen zur Führung der zweiten Werkzeugspindel (2a, 2b) gemäß einer zweiten Werkzeugbahn. Ein Bearbeitungsergebnis des ersten Werkstücks (5a, 5b) an einem Ende der ersten Werkzeugbahn ist gleich einem Bearbeitungsergebnis des zweiten Werkstücks (5a, 5b) an einem Ende der zweiten Werkzeugbahn. Die ersten Maschinenachsen und die zweiten Maschinenachsen werden derart angesteuert, dass eine Zeitdifferenz zwischen einem Erreichen des Endes der ersten Werkzeugbahn und einem Erreichen des Endes der zweiten Werkzeugbahn kleiner oder gleich einem vorgegebenen Grenzwert ist.

## Beschreibung

Die vorliegende Erfindung betrifft ein Verfahren zur rechnergestützten numerischen Steuerung einer Mehrspindel-Werkzeugmaschine, welche eine mit einem ersten Werkzeug bestückte erste Werkzeugspindel und eine von der ersten Werkzeugspindel unabhängig steuerbare und mit einem zweiten Werkzeug bestückte zweite Werkzeugspindel aufweist. Die Erfindung betrifft ferner eine Mehrspindel-Werkzeugmaschine, aufweisend eine mit einem ersten Werkzeug bestückbare erste Werkzeugspindel und eine von der ersten Werkzeugspindel unabhängig steuerbare und mit einem zweiten Werkzeug bestückbare zweite Werkzeugspindel. Zudem betrifft die Erfindung ein Computerprogramm und ein computerlesbares Speichermedium.

Im Bereich der Werkzeugmaschinen werden einige Maschinen als Mehrspindel-Werkzeugmaschinen, auch als Mehrspindler bezeichnet, ausgeführt. Diese weisen zwei oder mehr Werkzeugspindeln zur entsprechenden Bearbeitung von zwei oder mehr Werkstücken auf. Dadurch müssen zwei oder mehr Bearbeitungen und damit die Bewegungsführung und Spindelsteuerung zeitgleich, also synchron zueinander, erfolgen. Die Anwendung von mehreren synchronen Bearbeitungseinheiten auf einer Maschine lässt sich auf verschiedenste Technologien anwenden, zum Beispiel zum Fräsen, Drehen, Schleifen, und so weiter. Mehrspindel-Werkzeugmaschinen mit genau zwei Werkzeugspindeln werden auch als Doppelspindel-Werkzeugmaschinen oder Doppelspindler bezeichnet.

An Doppelspindlern können zum Beispiel zwei Werkstücke gleichzeitig mit zwei Werkzeugen bearbeitet, so dass am Ende der Bearbeitung zwei nominell identische Werkstücke vorliegen. Die Bearbeitung der beiden Werkstücke erfolgt synchron. Damit ist die Ausbringung auf einem Doppelspindler im Vergleich zu einer einspindligen Werkezugmaschine doppelt so hoch. Ein Doppelspindler kann jedoch auch betrieben werden, nur ein Werkstück zu fertigen, die zweite Spindel ist dann nicht aktiv.

Bei Doppelspindlern gibt es verschiedene Konzepte, deren Komplexität beispielsweise auf die jeweiligen Produktions- und Genauigkeitsanforderungen zugeschnitten werden kann. Die Konzepte unterscheiden sich konstruktiv beispielsweise in den Freiheitsgraden der einzelnen Werkzeugspindeln beziehungsweise Bearbeitungseinheiten.

In einfachen Doppelspindlern werden die beiden Werkzeugspindeln mechanisch starr miteinander verbunden. Der Spindelverbund wird dann durch die gemeinsamen Achsen, zum Beispiel X-, Y- und Z-Achse, bewegt. Ein komplexeres Konzept sieht für die beiden Werkzeugspindeln jeweils eigenständige Z-Achsen vor. Dadurch können die Werkzeugspindeln in der Z-Richtung unterschiedlich positioniert werden. Ein noch etwas komplexeres Konzept ermöglicht es durch die Verwendung von Ausgleichachsen, die redundant auf den Hauptachsen aufgebaut sind, die Werkzeugspindeln und damit die Werkzeuge in alle drei Achsrichtungen zu bewegen, jedoch nur für vergleichsweise kurze Verfahrbereiche.

Eine besonders hohe Genauigkeit kann durch sogenannte echte Mehrspindel-Werkzeugmaschinen erreicht werden, also Mehrspindel-Werkzeugmaschinen mit zwei oder mehr eigenständigen, also unabhängig voneinander steuerbaren und damit bewegbaren Werkzeugspindeln. Die beiden Werkzeugspindeln sind dann beispielsweise jeweils mit einer eigenen X-, Y- und Z-Achse ausgestattet. Je nach Ausführungsform und Technologie können stattdessen oder zusätzliche weitere lineare Achsen und/oder Rotationsachsen vorgesehen sein, die jeweils für beide Werkzeugspindeln unabhängig sind.

Die Werkzeugspindeln werden dann beispielsweise über ein und dieselbe CNC-Steuerung bedient und gesteuert, zum Beispiel über jeweils einen eigenen Bearbeitungskanal für jede Werkzeugspindel. Die einzelnen Achsen der Werkzeugspindeln können teilweise dieselbe Führungsschiene nutzen.

Ein Vorteil echter Mehrspindel-Werkzeugmaschinen besteht darin, dass die verschiedenen Werkzeugspindeln zur Fertigung nominell identischer Werkstücke mit Werkzeugen bestückt werden können, die zwar nominell ebenfalls identisch sind, deren Abmessungen sich aber beispielsweise aufgrund unterschiedlichem Verschleiß voneinander unterscheiden. Die unabhängige Steuerung der verschiedenen Werkzeugspindeln kann die unterschiedlichen Abmessungen kompensieren.

Für eine optimale Ausnutzung des gemeinsamen Arbeitsraumes beziehungsweise eine kompakte Konstruktion der Werkzeugmaschine ist es erstrebenswert, einen mechanischen Versatz zwischen den beiden Werkzeugspindeln möglichst klein auszulegen, beispielsweise kleiner als 1 m oder auch im Bereich von 500 mm liegen. Um derart kleine Abstände mechanisch realisieren zu können, müssten die beweglichen Ständer, an denen die Werkzeugspindeln montiert sind, oder sonstige bewegliche Komponenten, jedoch nur einen sehr geringen Abstand zueinander haben, beispielsweise wenige Millimeter. Es bestünde daher potenzielle Kollisionsgefahr. Diese bestünde vor allem, wenn die Werkzeugspindeln, wie oben erläutert, zur Kompensation unterschiedlicher Werkzeugabmessungen unterschiedlich angesteuert würden.

Auch durch andere Abweichungen betreffend die Werkzeugspindeln, etwa Nullpunktverschiebungen, unterschiedliche dynamisch Beschränkungen, mechanische Toleranzen oder unterschiedliche Ausgestaltungen der Spindeln, kann es zu einem Versatz kommen und damit potenziell zu einem Kollisionsrisiko.

Es ist eine Aufgabe der vorliegenden Erfindung, bei der Steuerung von Mehrspindel-Werkzeugmaschinen der eingangs genannten Art das Kollisionsrisiko zu reduzieren.

Diese Aufgabe wird durch den jeweiligen Gegenstand der unabhängigen Ansprüche erreicht. Vorteilhafte Weiterbildungen und bevorzugte Ausführungsformen sind Gegenstand der abhängigen Ansprüche.

Die Erfindung beruht auf dem Gedanken, dasselbe Teileprogramm in zwei Bearbeitungskanälen synchronisiert abzuarbeiten, um ein erstes Werkstück mittels eines ersten Werkzeugs, mit dem eine erste Werkzeugspindel bestückt ist, und ein zweites Werkstück mittels eines zweiten Werkzeugs, mit dem eine zweite Werkzeugspindel bestückt ist, zu bearbeiten. Dabei werden die Werkzeugspindeln trotz identischem Teileprogramm unterschiedlich bewegt, so dass beide Werkzeugspindeln zwangssynchronisiert werden.

Gemäß einem Aspekt der Erfindung wird ein Verfahren zur rechnergestützten numerischen Steuerung, CNC-Steuerung (Englisch: Computerized Numerical Control), einer Mehrspindel-Werkzeugmaschine angegeben. Die Mehrspindel-Werkzeugmaschine weist eine mit einem ersten Werkzeug bestückte erste Werkzeugspindel auf und eine mit einem zweiten Werkzeug bestückte zweite Werkzeugspindel. Die zweite Werkzeugspindel ist dabei unabhängig von der ersten Werkzeugspindel steuerbar.

Ein erstes Werkstück wird mittels des ersten Werkzeugs bearbeitet, indem ein vorgegebenes Teileprogramm in einem ersten Bearbeitungskanal abgearbeitet wird, insbesondere mittels der Steuervorrichtung. Ein zweites Werkstück wird mittels des zweiten Werkzeugs bearbeitet, indem das Teileprogramm in einem zweiten Bearbeitungskanal synchronisiert mit dem ersten Bearbeitungskanal abgearbeitet wird, insbesondere mittels der Steuervorrichtung. Die Abarbeitung des Teileprogramms in dem ersten Bearbeitungskanal beinhaltet eine Ansteuerung erster Maschinenachsen der Mehrspindel-Werkzeugmaschine zur Führung der ersten Werkzeugspindel gemäß einer ersten Werkzeugbahn. Die Abarbeitung des Teileprogramms in dem zweiten Bearbeitungskanal beinhaltet eine Ansteuerung zweiter Maschinenachsen der Mehrspindel-Werkzeugmaschine zur Führung der zweiten Werkzeugspindel gemäß einer zweiten Werkzeugbahn.

Durch die Abarbeitung des Teileprogramms in dem ersten Bearbeitungskanal und dem zweiten Bearbeitungskanal wird die erste Werkzeugspindel also gemäß der ersten Werkzeugbahn geführt und die zweite Werkzeugspindel wird gemäß der zweiten Werkzeugbahn geführt.

Dabei ist ein Bearbeitungsergebnis des ersten Werkstücks an einem Ende der ersten Werkzeugbahn gleich einem Bearbeitungsergebnis des zweiten Werkstücks an einem Ende der zweiten Werkzeugbahn ist. Die ersten Maschinenachsen und die zweiten Maschinenachsen werden dazu derart angesteuert werden, dass eine Zeitdifferenz zwischen einem Erreichen des Endes der ersten Werkzeugbahn durch das erste Werkzeug und einem Erreichen des Endes der zweiten Werkzeugbahn durch das zweite Werkzeug kleiner oder gleich einem vorgegebenen Grenzwert ist.

Die erste Werkzeugspindel kann durch entsprechende Ansteuerung und Bewegung der ersten Maschinenachsen geführt werden und die zweite Werkzeugspindel durch eine entsprechende Ansteuerung und Bewegung der zweiten Maschinenachsen. Die ersten Maschinenachsen beziehungsweise die zweiten Maschinenachsen können jeweils eine oder mehrere lineare oder translatorische Achsen beinhalten, beispielsweise eine x-, eine y- und eine z-Achse. Alternativ oder zusätzlich können die ersten Maschinenachsen beziehungsweise die zweiten Maschinenachsen jeweilige Rotationsachsen beinhalten.

Die Werkzeugspindeln sind unabhängig voneinander steuerbar. Dies kann insbesondere derart verstanden werden, dass die ersten Maschinenachsen unabhängig von den zweiten Maschinenachsen gesteuert und bewegt werden können. Somit ist es prinzipiell möglich, mittels der ersten Werkzeugspindel und der zweiten Werkzeugspindel voneinander unterschiedliche Teileprogramme abzuarbeiten.

Dass das Teileprogramm in dem ersten und dem zweiten Bearbeitungskanal synchronisiert abgearbeitet wird, kann insbesondere derart aufgefasst werden, dass die Abarbeitung zeitgleich beziehungsweise parallel erfolgt und dementsprechend auch die Ansteuerung der ersten Maschinenachsen synchronisiert mit der Ansteuerung der zweiten Maschinenachsen erfolgt, so dass auch die Bewegung der ersten Werkzeugspindel synchronisiert mit der Bewegung der zweiten Werkzeugspindel erfolgt, also insbesondere gleichzeitig.

Insbesondere kann die synchronisierte Abarbeitung des Teileprogramms in den beiden Bearbeitungskanälen und die resultierende synchronisierte Bewegung der ersten Werkzeugspindel und der zweiten Werkzeugspindel derart verstanden werden, dass die Bewegung der ersten Werkzeugspindel entlang der ersten Werkzeugbahn bis auf einen vorgegebenen Toleranzwert gleichzeitig mit der Bewegung der zweiten Werkzeugspindel entlang der zweiten Werkzeugbahn beginnt und endet. Ferner können optional weitere Zwischenpositionen auf der ersten und der zweiten Werkzeugbahn vorgegeben werden, die entsprechend der synchronisierten Abarbeitung und der synchronisierten Bewegung der Werkzeugspindeln bis auf einen vorgegebenen Toleranzwert gleichzeitig erreicht werden.

Ferner können in verschiedenen Ausführungsformen erste Werkzeugabmessungen des ersten Werkzeugs erhalten werden, insbesondere durch eine Steuervorrichtung der Mehrspindel-Werkzeugmaschine, die zur CNC-Steuerung der ersten Werkzeugspindel und der zweiten Werkzeugspindel eingerichtet ist. Es können in verschiedenen Ausführungsformen zweite Werkzeugabmessungen des zweiten Werkzeugs erhalten werden, insbesondere durch die Steuervorrichtung. Die ersten Werkzeugabmessungen unterscheiden sich dabei von den zweiten Werkzeugabmessungen.

In solchen Ausführungsformen wird eine Geschwindigkeitsdifferenz zwischen einer ersten mittleren Bahngeschwindigkeit der ersten Werkzeugbahn und einer zweiten mittleren Bahngeschwindigkeit der zweiten Werkzeugbahn durch die jeweilige Ansteuerung der ersten Maschinenachsen und der zweiten Maschinenachsen wird abhängig von den ersten Werkzeugabmessungen und den zweiten Werkzeugabmessungen eingestellt, insbesondere automatisch, beispielsweise mittels der Steuervorrichtung abhängig von dem Teileprogramm.

Da dasselbe Teileprogramm in beiden Bearbeitungskanälen abgearbeitet wird, ist das erste Werkzeug nominell identisch zum zweiten Werkzeug. Die unterschiedlichen Werkzeugabmessungen resultieren beispielsweise aus unterschiedlichen Verschleißgraden des ersten Werkzeugs und des zweiten Werkzeugs. Ferner sind auch entsprechend Soll-Maße für das erste Werkstück und das zweite Werkstück identisch.

Je nach Technologie der Mehrspindel-Werkzeugmaschine, ob es also sich beispielsweise um eine Werkzeugmaschine zum Fräsen, Drehen, Schleifen oder Bohren und so weiter handelt, kommen unterschiedliche erste Werkzeuge beziehungsweise zweite Werkzeuge zum Einsatz. Dementsprechend kann sich auch die Art der Werkzeugabmessungen je nach Technologie unterscheiden. Insbesondere sind das erste und das zweite Werkzeug durch jeweilige Soll-Maße, gegebenenfalls inklusive entsprechender Toleranzbereiche, für eines oder mehrere Maße, beispielsweise Längenmaße oder Radien und so weiter, definiert. Die ersten Werkzeugabmessungen beziehungsweise die zweiten Werkzeugabmessungen entsprechen den tatsächlichen Abmessungen entsprechend dieser Soll-Maße und unterscheiden sich daher im Allgemeinen für das erste und das zweite Werkzeug voneinander.

Die ersten und die zweiten Werkzeugabmessungen können vor der Durchführung des erfindungsgemäßen Verfahrens durch konventionelle Messungen, beispielsweise manuelle oder automatische Messungen, ermittelt und der Steuervorrichtung bereitgestellt werden. Es ist auch möglich, dass in manchen Ausführungsformen des erfindungsgemäßen Verfahrens die ersten und/oder die zweiten Werkzeugabmessungen in einem Verfahrensschritt des erfindungsgemäßen Verfahrens bestimmt werden, insbesondere automatisch, beispielsweise mittels der Mehrspindel-Werkzeugmaschine selbst.

Dass sich die ersten Werkzeugabmessungen von den zweiten Werkzeugabmessungen unterscheiden, kann insbesondere derart verstanden werden, dass die ersten Werkzeugabmessungen einen oder mehrere erste Ist-Werte für das erste Werkzeug beinhalten und die zweiten Werkzeugabmessungen einen oder mehrere Ist-Werte für das zweite Werkzeug, wobei sich mindestens einer der ersten Ist-Werte von einem entsprechenden der zweiten Ist-Werte unterscheidet.

Die erste Werkzeugbahn und die zweite Werkzeugbahn, insbesondere deren jeweiliger räumlicher Verlauf, ist durch das Teileprogramm, also insbesondere vorgegebene Sollbewegungen oder Soll-Maße des Teileprogramms, in Kombination mit den ersten Werkzeugabmessungen und den zweiten Werkzeugabmessungen gegeben.

Dadurch, dass sich die ersten Werkzeugabmessungen von den zweiten Werkzeugabmessungen unterscheiden, ist in entsprechenden Ausführungsformen zur synchronisierten Bewegung der Werkzeugspindeln eine Anpassung der mittleren Bahngeschwindigkeiten der ersten Werkzeugbahn und der zweiten Werkzeugbahn vorgesehen. Je stärker die ersten Werkzeugabmessungen von den zweiten Werkzeugabmessungen abweichen, desto größer kann insbesondere die Geschwindigkeitsdifferenz eingestellt werden, um die oben genannten Positionen am Anfang und am Ende beziehungsweise während der ersten und der zweiten Werkzeugbahn gleichzeitig bis auf die entsprechenden Toleranzwerte zu erreichen.

Der exakte Zusammenhang zwischen der Geschwindigkeitsdifferenz und dem Unterschied in den ersten und zweiten Werkzeugabmessungen hängt zum einen davon ab, wie die Werkzeuge ausgestaltet sind und zum anderen davon, wie das Bearbeitungsergebnis für die Werkstücke ausgestaltet ist. Ist das jeweilige Bearbeitungsergebnis jedoch vorgegeben, insbesondere durch das Teileprogramm, und sind die Unterschiede in den Werkzeugabmessungen bekannt, so kann durch geometrische Überlegungen stets berechnet werden, wie die mittleren Geschwindigkeiten zwischen den beiden Werkzeugbahnen voneinander abweichen müssen, so dass die synchronisierte Bewegung erreicht wird.

Die Geschwindigkeitsdifferenz zwischen der mittleren Bahngeschwindigkeit der ersten Werkzeugbahn und der mittleren Bahngeschwindigkeit der zweiten Werkzeugbahn kann auf unterschiedliche Art erreicht werden. Beispielsweise können die Werkzeugspindeln kontinuierlich bewegt werden, wobei die mittlere Bahngeschwindigkeit einer der Bahnen geringer ist als die der anderen Bahn. Es ist auch möglich, dass beispielsweise eine der Werkzeugspindeln kontinuierlich bewegt wird, wohingegen die andere Werkzeugspindel nur stückweise kontinuierlich bewegt wird, also entlang der entsprechenden Werkzeugbahn einmal oder mehrmals gestoppt wird, um die entsprechende Bahngeschwindigkeit im Mittel zu reduzieren.

Dabei sei ferner darauf hingewiesen, dass die erste Werkzeugbahn und die zweite Werkzeugbahn nicht notwendigerweise einem vollständigen Bearbeitungsschritt zur Bearbeitung der Werkstücke entsprechen, sondern gegebenenfalls auch lediglich einem Teil eines solchen Bearbeitungsschritts.

Auch die Einstellung der Geschwindigkeitsdifferenz kann auf unterschiedliche Arten erfolgen, insbesondere durch die Steuervorrichtung, beispielsweise direkt oder indirekt.

Beispielsweise kann die Geschwindigkeitsdifferenz aus den Sollvorgaben des Teileprogramms und dem Unterschied in den Werkzeugabmessungen berechnet werden und die entsprechenden dynamischen Kenngrößen der ersten und der zweiten Maschinenachsen, also insbesondere deren Achsgeschwindigkeiten und/oder Achsbeschleunigungen und/oder Achsrucke, können abhängig von der so berechneten Geschwindigkeitsdifferenz durch die Steuervorrichtung gewählt werden. In anderen Ausführungsformen können die dynamischen Kenngrößen der Maschinenachsen direkt aus dem Unterschied zwischen den Werkzeugabmessungen und den Sollvorgaben des Teileprogramms berechnet werden, so dass die synchronisierte Bewegung der Werkzeugspindeln erfolgt.

In verschiedenen Ausführungsformen kann die Geschwindigkeitsdifferenz zusätzlich zum Unterschied zu den Werkzeugabmessungen auch von den tatsächlichen Ist-Werten oder Soll-Werten für die Werkzeugabmessungen abhängen.

Durch die Einstellung der Geschwindigkeitsdifferenz abhängig von den ersten Werkzeugabmessungen und den zweiten Werkzeugabmessungen kann also insbesondere eine Differenz zwischen den Bearbeitungszeiten des ersten Werkstücks und des zweiten Werkstücks minimiert beziehungsweise unter einen vorgegebenen Toleranzwert gebracht werden. Auf diese Weise kann sichergestellt werden, dass die momentane Abweichung der individuellen Achspositionen oder Werkzeugspindelpositionen wenigstens näherungsweise konstant bleiben, während das erste und das zweite Werkstück bearbeitet werden. Auf diese Weise wird das Risiko für Kollisionen zwischen der ersten Werkzeugspindel und der zweiten Werkzeugspindel beziehungsweise zwischen Rahmenelementen, Ständern oder sonstigen beweglichen Komponenten reduziert werden. Folglich kann ein geringerer Arbeitsraum der Mehrspindel-Werkzeugmaschine erreicht werden.

Die Geschwindigkeitsdifferenz ist dabei insbesondere nicht explizit im Teileprogramm vorhanden, muss also durch einen Nutzer nicht ausdrücklich programmiert werden. Vielmehr kann die Steuerungsvorrichtung diese anhand des Unterschieds zwischen den Werkzeugabmessungen berechnen beziehungsweise einstellen.

Es wird also insbesondere eine Zwangssynchronisierung der beiden Bearbeitungskanäle bewirkt, indem die aufgrund der Abweichungen in den Werkzeugabmessungen kürzere Bahn zwangsweise verlangsamt wird, um eine Anpassung an die längere Bahn zu bewirken.

Gemäß zumindest einer Ausführungsform wird die Geschwindigkeitsdifferenz abhängig von den ersten Werkzeugabmessungen und den zweiten Werkzeugabmessungen berechnet, insbesondere mittels der Steuervorrichtung. Die Geschwindigkeitsdifferenz wird insbesondere abhängig von den ersten Werkzeugabmessungen und den zweiten Werkzeugabmessungen sowie Sollvorgaben gemäß dem Teileprogramm berechnet. Jeweilige Achsdynamikgrößen für die ersten Maschinenachsen und für die zweiten Maschinenachsen werden abhängig von der Geschwindigkeitsdifferenz berechnet. Die Geschwindigkeitsdifferenz wird eingestellt, indem die Ansteuerung der ersten Maschinenachsen und der zweiten Maschinenachsen entsprechend der berechneten jeweiligen Achsdynamikgrößen erfolgt.

Die Achsdynamikgrößen beinhalten also insbesondere erste Achsdynamikgrößen für die ersten Maschinenachsen und zweite Achsdynamikgrößen für die zweiten Maschinenachsen.

Die jeweiligen Achsdynamikgrößen können beispielsweise jeweilige Achsgeschwindigkeiten der ersten Maschinenachsen beziehungsweise der zweiten Maschinenachsen, jeweilige Achsbeschleunigungen der ersten Maschinenachsen beziehungsweise der zweiten Maschinenachsen und/oder jeweilige Achsrucke der ersten Maschinenachsen beziehungsweise der zweiten Maschinenachsen und/oder jeweilige Achssnaps der ersten Maschinenachsen beziehungsweise der zweiten Maschinenachsen beinhalten. Der Snap ist dabei die zeitliche Ableitung des Rucks, also die vierte zeitliche Ableitung des Orts. Gegebenenfalls können auch noch höhere Ableitungen des Orts berücksichtigt werden.

Gemäß zumindest einer Ausführungsform werden jeweilige Achsdynamikgrößen der ersten Maschinenachsen und der zweiten Maschinenachsen abhängig von den ersten Werkzeugabmessungen und den zweiten Werkzeugabmessungen berechnet, insbesondere mittels der Steuervorrichtung. Die Geschwindigkeitsdifferenz wird eingestellt, indem die Ansteuerung der ersten Maschinenachsen und der zweiten Maschinenachsen entsprechend der berechneten jeweiligen Achsdynamikgrößen erfolgt.

Mit anderen Worten wird in solchen Ausführungsformen die Geschwindigkeitsdifferenz nicht explizit berechnet, sondern die Einstellung der Geschwindigkeitsdifferenz erfolgt indirekt durch die Einstellung der jeweiligen Achsdynamikgrößen. Die Berechnung der jeweiligen Achsdynamikgrößen kann insbesondere abhängig von den ersten Werkzeugabmessungen und den zweiten Werkzeugabmessungen sowie abhängig von den Sollvorgaben gemäß dem Teileprogramm erfolgen.

Gemäß zumindest einer Ausführungsform enthalten die jeweiligen Achsdynamikgrößen jeweilige Achsgeschwindigkeiten der ersten Maschinenachsen und der zweiten Maschinenachsen.

Insbesondere enthalten die ersten Achsdynamikgrößen erste Achsgeschwindigkeiten der ersten Maschinenachsen und die zweiten Achsdynamikgrößen enthalten zweite Achsgeschwindigkeiten der zweiten Maschinenachsen.

Bei den jeweiligen Achsgeschwindigkeiten kann es sich beispielsweise um während der jeweiligen Werkzeugbahn konstante oder stückweise konstante Geschwindigkeiten handeln oder es kann sich um entsprechende Zielgeschwindigkeiten für die entsprechenden Maschinenachsen handeln. Die jeweiligen Achsgeschwindigkeiten können beispielsweise durch die maximal zulässigen Achsbeschleunigungen erreicht werden oder die Achsbeschleunigungen können ebenfalls vorgegeben werden oder ein Bereich für die Achsbeschleunigungen kann vorgegeben werden.

Durch die Berechnung der Achsgeschwindigkeiten oder die Ableitung der Achsgeschwindigkeiten aus der berechneten Geschwindigkeitsdifferenz kann die Geschwindigkeitsdifferenz in einfacher Weise eingestellt werden.

Gemäß zumindest einer Ausführungsform enthalten die jeweiligen Achsdynamikgrößen jeweilige Achsbeschleunigungen der ersten Maschinenachsen und der zweiten Maschinenachsen. Insbesondere beinhalten die ersten Achsdynamikgrößen jeweilige Achsbeschleunigungen der ersten Maschinenachsen und die zweiten Achsdynamikgrößen der zweiten Maschinenachsen beinhalten jeweilige Achsbeschleunigungen der zweiten Maschinenachsen.

Insbesondere enthalten die ersten Achsdynamikgrößen erste Achsbeschleunigungen der ersten Maschinenachsen und die zweiten Achsdynamikgrößen enthalten zweite Achsbeschleunigungen der zweiten Maschinenachsen.

Bei den jeweiligen Achsbeschleunigungen kann es sich beispielsweise um während der jeweiligen Werkzeugbahn konstante oder stückweise konstante Beschleunigungen handeln oder es kann sich um entsprechende Zielbeschleunigungen für die entsprechenden Maschinenachsen handeln. Die jeweiligen Achsbeschleunigungen können beispielsweise durch die maximal zulässigen Achsrucke erreicht werden oder die Achsrucke können ebenfalls vorgegeben werden oder ein Bereich für die Achsrucke kann vorgegeben werden.

Gemäß zumindest einer Ausführungsform enthalten die jeweiligen Achsdynamikgrößen jeweilige Achsrucke der ersten Maschinenachsen und der zweiten Maschinenachsen. Insbesondere beinhalten die ersten Achsdynamikgrößen jeweilige Achsrucke der ersten Maschinenachsen und die zweiten Achsdynamikgrößen der zweiten Maschinenachsen beinhalten jeweilige Achsrucke der zweiten Maschinenachsen.

Insbesondere enthalten die ersten Achsdynamikgrößen erste Achsrucke der ersten Maschinenachsen und die zweiten Achsdynamikgrößen enthalten zweite Achsrucke der zweiten Maschinenachsen.

Gemäß zumindest einer Ausführungsform wird die Geschwindigkeitsdifferenz eingestellt, indem abhängig von den ersten Werkzeugabmessungen und den zweiten Werkzeugabmessungen wenigstens ein erstes Stoppintervall bestimmt wird und die erste Werkzeugspindel entlang der ersten Werkzeugbahn während des wenigstens einen ersten Stoppintervalls angehalten wird. Alternativ wird abhängig von dem Unterschied zwischen den ersten Werkzeugabmessungen und den zweiten Werkzeugabmessungen, insbesondere mittels der Steuervorrichtung, wenigstens ein zweites Stoppintervall bestimmt und die zweite Werkzeugspindel wird entlang der zweiten Werkzeugbahn während des wenigstens einen zweiten Stoppintervalls angehalten.

Durch das wenigstens eine erste Stoppintervall wird also die Bewegung der ersten Werkzeugspindel künstlich verlangsamt, um die Synchronität zwischen den beiden Bearbeitungskanälen zu erreichen, oder es wird durch das wenigstens eine zweite Stoppintervall die Bewegung der zweiten Werkzeugspindel künstlich verlangsamt, um die Synchronität herzustellen. Die Geschwindigkeitsdifferenz resultiert dann aus dem wenigstens einen ersten Stoppintervall oder aus dem wenigstens einen zweiten Stoppintervall.

Insbesondere wird entweder das wenigstens eine erste Stoppintervall bestimmt und die erste Werkzeugspindel entsprechend angehalten oder es wird das wenigstens eine zweite Stoppintervall bestimmt und die zweite Werkzeugspindel wird entsprechend wie beschrieben angehalten. Welcher der beiden Fälle eintritt, hängt davon ab, wie sich die Werkzeugabmessungen unterscheiden und wie die Sollvorgaben gemäß dem Teileprogramm beschaffen sind. Es wird insbesondere diejenige Werkzeugspindel künstlich verlangsamt, die deren Bahnlänge kürzer ist.

Ein Stoppintervall kann als Zeitraum verstanden werden, währenddessen sämtliche entsprechenden Maschinenachsen angehalten sind, also stillstehen. Während des wenigstens einen ersten Stoppintervalls stehen also die ersten Maschinenachsen still beziehungsweise während des wenigstens einen zweiten Stoppintervalls stehen die zweiten Maschinenachsen still.

Beispielsweise kann das wenigstens eine erste Stoppintervall zwei oder mehr erste Stoppintervalle, insbesondere drei oder mehr erste Stoppintervalle, beinhalten. Beispielsweise kann das wenigstens eine zweite Stoppintervall zwei oder mehr zweite Stoppintervalle, insbesondere drei oder mehr zweite Stoppintervalle, beinhalten. Je mehr Stoppintervalle vorgesehen werden, desto geringer bleibt die maximale Positionsabweichung zwischen den beiden Werkzeugen.

Bei Ausführungsformen, in denen das wenigstens eine erste Stoppintervall oder das wenigstens eine zweite Stoppintervall vorgesehen ist, können die jeweiligen Achsdynamikgrößen, insbesondere die jeweiligen Achsgeschwindigkeiten, der ersten Maschinenachsen beziehungsweise der zweiten Maschinenachsen außerhalb der entsprechenden Stoppintervalle im Wesentlichen gleich gewählt werden.

Gemäß zumindest einer Ausführungsform wird, insbesondere mittels der Steuervorrichtung durch die Ansteuerung der ersten Maschinenachsen und der zweiten Maschinenachsen, eine Beschleunigungsdifferenz zwischen einer ersten Bahnbeschleunigung der ersten Werkzeugbahn und einer zweiten Bahnbeschleunigung der zweiten Werkzeugbahn abhängig von dem Unterschied zwischen den ersten Werkzeugabmessungen und den zweiten Werkzeugabmessungen eingestellt.

Die Ausführungen betreffend die Geschwindigkeitsdifferenz lassen sich analog auf die Beschleunigungsdifferenz übertragen. Durch die entsprechende Einstellung der Beschleunigungsdifferenz lässt sich eine noch bessere Synchronisierung der beiden Bewegungen der beiden Werkzeugspindeln erreichen.

Gemäß zumindest einer Ausführungsform wird, insbesondere mittels der Steuervorrichtung durch die Ansteuerung der ersten Maschinenachsen und der zweiten Maschinenachsen, eine Ruckdifferenz zwischen einem ersten Bahnruck der ersten Werkzeugbahn und einem zweiten Bahnruck der zweiten Werkzeugbahn abhängig von dem Unterschied zwischen den ersten Werkzeugabmessungen und den zweiten Werkzeugabmessungen eingestellt.

Die Ausführungen betreffend die Geschwindigkeitsdifferenz lassen sich analog auf die Ruckdifferenz übertragen. Durch die entsprechende Einstellung der Ruckdifferenz lässt sich eine noch bessere Synchronisierung der beiden Bewegungen der beiden Werkzeugspindeln erreichen.

Gemäß zumindest einer Ausführungsform werden für das erste Werkstück und das zweite Werkstück jeweils identische Soll-Maße vorgegeben und das Teileprogramm wird gemäß den Soll-Maßen vorgegeben.

Mit anderen Worten sind alle Soll-Maße für das erste Werkstück gleich den entsprechenden Soll-Maßen für zweite Werkstück. Das gefertigte erste Werkstück ist also nominell identisch zum gefertigten zweiten Werkstück. Das Teileprogramm wird derart angegeben, insbesondere programmiert, dass die identischen Soll-Maße resultieren. Beispielsweise können dazu auch identische Soll-Abmessungen für das erste und das zweite Werkzeug angenommen werden.

Gemäß zumindest einer Ausführungsform handelt es sich bei den ersten Werkzeugabmessungen und den zweiten Werkzeugabmessungen jeweils um Ist-Abmessungen und Soll-Abmessungen für das erste Werkzeug und sind identisch zu Soll-Abmessungen für das zweite Werkzeug.

Mit anderen Worten resultiert der Unterschied zwischen den ersten Abmessungen und den zweiten Abmessungen auf Verschleiß oder Abnutzung des ersten beziehungsweise des zweiten Werkzeugs.

Gemäß zumindest einer Ausführungsform werden die ersten Werkzeugabmessungen mittels einer Messvorrichtung der Mehrspindel-Werkzeugmaschine gemessen und/oder die zweiten Werkzeugabmessungen werden mittels der Messvorrichtung oder einer weiteren Messvorrichtung der Mehrspindel-Werkzeugmaschine gemessen.

Auf diese Weise können die gemessenen ersten und/oder zweiten Werkzeugabmessungen von der Messvorrichtung und/oder der weiteren Messvorrichtung direkt an die Steuervorrichtung übermittelt werden.

Gemäß zumindest einer Ausführungsform unterscheiden sich jeweilige Parameterwerte wenigstens eines mechanischen Parameters und/oder wenigstens eines dynamischen Parameters und/oder wenigstens eines Positionsparameters für die erste Werkzeugspindel und die zweite Werkzeugspindel voneinander unterscheiden.

Beispielsweise enthält der wenigstens eine mechanische Parameter die Werkzeugabmessungen des ersten Werkzeugs beziehungsweise des zweiten Werkzeugs. Nicht nur durch unterschiedliche Werkzeugabmessungen des ersten und des zweiten Werkzeugs kann jedoch potenziell eine asynchrone Bewegung der Werkzeugspindeln verursacht werden. Dies kann auch durch Abweichungen des wenigstens eines dynamischen Parameters und/oder des wenigstens eines Positionsparameters der Fall sein.

Das erfindungsgemäße Verfahren kann auch in diesen Fällen eine zwangsweise Synchronisierung erreichen. Die Ausführungen betreffend die unterschiedliche Werkzeugabmessungen gelten daher analog für Situationen, in denen sich die Parameterwerte des sonstiger mechanischer Parameter voneinander unterscheiden und/oder Parameterwerte des wenigstens eines dynamischen Parameters und/oder des wenigstens eines Positionsparameters.

Gemäß zumindest einer Ausführungsform enthält der wenigstens eine dynamische Parameter einen maximal zulässigen oder möglichen Vorschub der ersten Werkzeugspindel beziehungsweise der zweiten Werkzeugspindel.

Ist beispielsweise in dem Teileprogramm ein bestimmter Werkzeugvorschub vorgesehen, so kann es vorkommen, dass dieser von einer Werkzeugspindel realisiert werden kann, durch die andere Werkzeugspindel jedoch aufgrund vorgegebener dynamischer Beschränkungen jedoch nicht. Daraus potenziell resultierende Asynchronitäten können durch das vorgeschlagene Verfahren reduziert oder verhindert werden.

Gemäß zumindest einer Ausführungsform enthält der wenigstens eine Positionsparameter eine Nullpunktposition des ersten Werkzeugs beziehungsweise des zweiten Werkzeugs.

Durch leicht unterschiedliches Einspannen der Werkzeuge können sich leichte Verschiebungen der Nullpunktposition ergeben. Daraus potenziell resultierende Asynchronitäten können durch das vorgeschlagene Verfahren reduziert oder verhindert werden.

Gemäß zumindest einer Ausführungsform wird die Geschwindigkeitsdifferenz zwischen einer ersten mittleren Bahngeschwindigkeit der ersten Werkzeugbahn und einer zweiten mittleren Bahngeschwindigkeit der zweiten Werkzeugbahn eingestellt, sodass die Zeitdifferenz kleiner oder gleich dem Grenzwert ist.

Gemäß zumindest einer Ausführungsform wird die Geschwindigkeitsdifferenz abhängig von den Parameterwerten für die erste Werkzeugspindel und die zweite Werkzeugspindel berechnet. Die jeweiligen Achsdynamikgrößen für die ersten Maschinenachsen und die zweiten Maschinenachsen werden abhängig von der Geschwindigkeitsdifferenz berechnet werden. Die Geschwindigkeitsdifferenz wird eingestellt, indem die Ansteuerung der ersten Maschinenachsen und der zweiten Maschinenachsen entsprechend der berechneten jeweiligen Achsdynamikgrößen erfolgt.

Gemäß zumindest einer Ausführungsform werden die jeweiligen Achsdynamikgrößen der ersten Maschinenachsen und der zweiten Maschinenachsen abhängig von den Parameterwerten für die erste Werkzeugspindel und die zweite Werkzeugspindel berechnet. Die Geschwindigkeitsdifferenz wird eingestellt, indem die Ansteuerung der ersten Maschinenachsen und der zweiten Maschinenachsen entsprechend der berechneten jeweiligen Achsdynamikgrößen erfolgt.

Gemäß zumindest einer Ausführungsform wird die Geschwindigkeitsdifferenz eingestellt, indem abhängig von den Parameterwerten für die erste Werkzeugspindel und die zweite Werkzeugspindel wenigstens ein erstes Stoppintervall bestimmt wird und die erste Werkzeugspindel entlang der ersten Werkzeugbahn während des wenigstens einen ersten Stoppintervalls angehalten wird.

Gemäß zumindest einer Ausführungsform wird die Geschwindigkeitsdifferenz eingestellt, indem abhängig von den Parameterwerten für die erste Werkzeugspindel und die zweite Werkzeugspindel wenigstens ein zweites Stoppintervall bestimmt wird und die zweite Werkzeugspindel entlang der zweiten Werkzeugbahn während des wenigstens einen zweiten Stoppintervalls angehalten wird.

Gemäß zumindest einer Ausführungsform werden die Beschleunigungsdifferenz zwischen einer ersten Bahnbeschleunigung der ersten Werkzeugbahn und einer zweiten Bahnbeschleunigung der zweiten Werkzeugbahn und/oder die Ruckdifferenz zwischen einem ersten Bahnruck der ersten Werkzeugbahn und einem zweiten Bahnruck der zweiten Werkzeugbahn und/oder die Snapdifferenz zwischen einem ersten Bahnsnap der ersten Werkzeugbahn und einem zweiten Bahnsnap der zweiten Werkzeugbahn abhängig von den Parameterwerten für die erste Werkzeugspindel und die zweite Werkzeugspindel eingestellt.

Gemäß einem weiteren Aspekt der Erfindung wird eine Mehrspindel-Werkzeugmaschine angegeben. Die Mehrspindel-Werkzeugmaschine weist eine mit einem ersten Werkzeug bestückbare oder bestückte erste Werkzeugspindel auf und eine von der ersten Werkzeugspindel unabhängig steuerbare und mit einem zweiten Werkzeug bestückbare oder bestückte Werkzeugspindel. Die Mehrspindel-Werkzeugmaschine weist eine Steuervorrichtung auf, die zur CNC-Steuerung der ersten Werkzeugspindel und der zweiten Werkzeugspindel eingerichtet ist.

Die Steuervorrichtung ist dazu eingerichtet, zum Bearbeiten des ersten Werkstücks mittels des ersten Werkzeugs ein vorgegebenes Teileprogramm in einem ersten Bearbeitungskanal abzuarbeiten und zum Bearbeiten des zweiten Werkstücks mittels des zweiten Werkzeugs das Teileprogramm in einem zweiten Bearbeitungskanal synchronisiert mit dem ersten Bearbeitungskanal abzuarbeiten. Die Steuervorrichtung ist dazu eingerichtet, zur Abarbeitung des Teileprogramms in dem ersten Bearbeitungskanal erste Maschinenachsen zur Führung der ersten Werkzeugspindel gemäß einer ersten Werkzeugbahn anzusteuern und zur Abarbeitung des Teileprogramms in dem zweiten Bearbeitungskanal zweite Maschinenachsen zur Führung der zweiten Werkzeugspindel gemäß einer zweiten Werkzeugbahn anzusteuern, wobei ein Bearbeitungsergebnis des ersten Werkstücks an einem Ende der ersten Werkzeugbahn gleich einem Bearbeitungsergebnis des zweiten Werkstücks an einem Ende der zweiten Werkzeugbahn ist. Die Steuervorrichtung ist dazu eingerichtet, die ersten Maschinenachsen und die zweiten Maschinenachsen derart anzusteuern, dass eine Zeitdifferenz zwischen einem Erreichen des Endes der ersten Werkzeugbahn und einem Erreichen des Endes der zweiten Werkzeugbahn kleiner oder gleich einem vorgegebenen Grenzwert ist.

Die Steuereinheit beinhaltet insbesondere eine oder mehrere Recheneinheiten. Unter einer Recheneinheit kann insbesondere ein Datenverarbeitungsgerät verstanden werden, das einen Verarbeitungsschaltkreis enthält. Die Recheneinheit kann also insbesondere Daten zur Durchführung von Rechenoperationen verarbeiten. Darunter fallen gegebenenfalls auch Operationen, um indizierte Zugriffe auf eine Datenstruktur, beispielsweise eine Umsetzungstabelle, LUT (englisch: "look-up table"), durchzuführen.

Die Recheneinheit kann insbesondere einen oder mehrere Computer, einen oder mehrere Mikrocontroller und/oder einen oder mehrere integrierte Schaltkreise enthalten, beispielsweise eine oder mehrere anwendungsspezifische integrierte Schaltungen, ASIC (englisch: "application-specific integrated circuit"), eines oder mehrere feldprogrammierbare Gate-Arrays, FPGA, und/oder eines oder mehrere Einchipsysteme, SoC (englisch: "system on a chip"). Die Recheneinheit kann auch einen oder mehrere Prozessoren, beispielsweise einen oder mehrere Mikroprozessoren, eine oder mehrere zentrale Prozessoreinheiten, CPU (englisch: "central processing unit"), eine oder mehrere Grafikprozessoreinheiten, GPU (englisch: "graphics processing unit") und/oder einen oder mehrere Signalprozessoren, insbesondere einen oder mehrere Digitalsignalprozessoren, DSP, enthalten. Die Recheneinheit kann auch einen physischen oder einen virtuellen Verbund von Computern oder sonstigen der genannten Einheiten beinhalten.

In verschiedenen Ausführungsbeispielen beinhaltet die Recheneinheit eine oder mehrere Hardware- und/oder Softwareschnittstellen und/oder eine oder mehrere Speichereinheiten.

Eine Speichereinheit kann als flüchtiger Datenspeicher, beispielsweise als dynamischer Speicher mit wahlfreiem Zugriff, DR_AM (englisch: "dynamic random access memory") oder statischer Speicher mit wahlfreiem Zugriff, SR_AM (englisch: "static random access memory"), oder als nicht-flüchtiger Datenspeicher, beispielsweise als Festwertspeicher, ROM (englisch: "read-only memory"), als programmierbarer Festwertspeicher, PROM (englisch: "programmable read-only memory"), als löschbarer programmierbarer Festwertspeicher, EPROM (englisch: "erasable programmable read-only memory"), als elektrisch löschbarer programmierbarer Festwertspeicher, EEPROM (englisch: "electrically erasable programmable read-only memory"), als Flash-Speicher oder Flash-EEPROM, als ferroelektrischer Speicher mit wahlfreiem Zugriff, FRAM (englisch: "ferroelectric random access memory"), als magnetoresistiver Speicher mit wahlfreiem Zugriff, MRAM (englisch: "magnetoresistive random access memory") oder als Phasenänderungsspeicher mit wahlfreiem Zugriff, PCR_AM (englisch: "phase-change random access memory"), ausgestaltet sein.

Weitere Ausführungsformen der erfindungsgemäßen Mehrspindel-Werkzeugmaschine folgen unmittelbar aus den verschiedenen Ausgestaltungen des erfindungsgemäßen Verfahrens und umgekehrt. Insbesondere lassen sich einzelne Merkmale und entsprechende Erläuterungen sowie Vorteile bezüglich der verschiedenen Ausführungsformen zu dem erfindungsgemäßen Verfahren analog auf entsprechende Ausführungsformen der erfindungsgemäßen Mehrspindel-Werkzeugmaschine übertragen. Insbesondere ist die erfindungsgemäße Mehrspindel-Werkzeugmaschine zum Durchführen eines erfindungsgemäßen Verfahrens ausgebildet oder programmiert. Insbesondere führt die erfindungsgemäße Mehrspindel-Werkzeugmaschine das erfindungsgemäße Verfahren durch.

Gemäß einem weiteren Aspekt der Erfindung wird ein Computerprogramm mit Befehlen angegeben. Bei Ausführung der Befehle durch die Steuervorrichtung einer Mehrspindel-Werkzeugmaschine gemäß der Erfindung veranlassen die Befehle die Mehrspindel-Werkzeugmaschine dazu, ein erfindungsgemäßes Verfahren zur Steuerung einer Mehrspindel-Werkzeugmaschine durchzuführen.

Die Befehle können beispielsweise als Programmcode vorliegen. Der Programmcode kann beispielsweise als Binärcode oder Assembler und/oder als Quellcode einer Programmiersprache, zum Beispiel C, und/oder als Programmskript, zum Beispiel Python, bereitgestellt sein.

Gemäß einem weiteren Aspekt der Erfindung wird ein computerlesbares Speichermedium angegeben, welches ein erfindungsgemäßes Computerprogramm speichert.

Weitere Merkmale der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren gezeigten Merkmale und Merkmalskombinationen können nicht nur in der jeweils angegebenen Kombination, sondern auch in anderen Kombinationen von der Erfindung umfasst sein. Es können insbesondere auch Ausführungen und Merkmalskombinationen von der Erfindung umfasst sein, die nicht alle Merkmale eines ursprünglich formulierten Anspruchs aufweisen. Es können darüber hinaus Ausführungen und Merkmalskombinationen von der Erfindung umfasst, die über die in den Rückbezügen der Ansprüche dargelegten Merkmalskombinationen hinausgehen oder von diesen abweichen.

Die Erfindung wird im Folgenden anhand konkreter Ausführungsbeispiele und zugehöriger schematischer Zeichnungen näher erläutert. In den Figuren können gleiche oder funktionsgleiche Elemente mit denselben Bezugszeichen versehen sein. Die Beschreibung gleicher oder funktionsgleicher Elemente wird gegebenenfalls nicht notwendigerweise bezüglich verschiedener Figuren wiederholt.

In den Figuren zeigen:
- FIG 1: eine schematische Darstellung einer beispielhaften Ausführungsform einer erfindungsgemäßen Mehrspindel-Werkzeugmaschine,
- FIG 2: eine schematische Darstellung eines ersten Werkstücks und eines ersten Werkzeugs zur Bearbeitung des ersten Werkstücks;
- FIG 3: eine schematische Darstellung eines zweiten Werkstücks und eines zweiten Werkzeugs zur Bearbeitung des zweiten Werkstücks;
- FIG 4: eine weitere schematische Darstellung des ersten Werkstücks und des ersten Werkzeugs; und
- FIG 5: eine weitere schematische Darstellung des zweiten Werkstücks und des zweiten Werkzeugs.

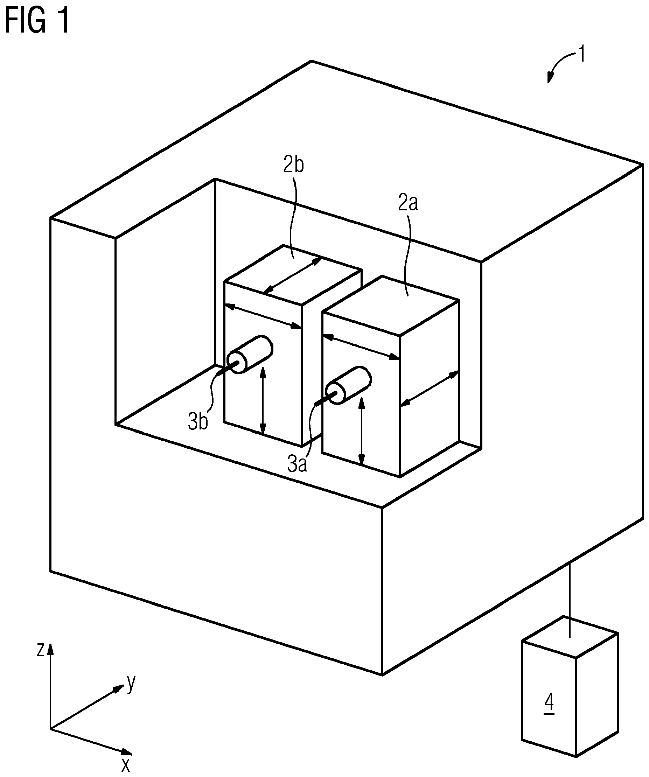

In FIG 1 ist schematisch eine beispielhafte Ausführungsform einer erfindungsgemäßen Mehrspindel-Werkzeugmaschine 1 gezeigt. Die Mehrspindel-Werkzeugmaschine 1 ist im Beispiel der FIG 1 als Doppelspindel-Werkzeugmaschine dargestellt. Die Ausführungen lassen sich jedoch auch auf Werkzeugmaschinen mit mehr als zwei Werkzeugspindeln analog übertragen.

Die Mehrspindel-Werkzeugmaschine 1 weist eine erste Werkzeugspindel 2a auf, die mit einem ersten Werkzeug 3a bestückt ist, sowie eine zweite Werkzeugspindel 2b, die mit einem zweiten Werkzeug 3b bestückt ist. Die zweite Werkzeugspindel 2b ist dabei unabhängig von der ersten Werkzeugspindel 2a steuerbar. In einem nicht beschränkenden Beispiel sind die erste Werkzeugspindel 2a und die zweite Werkzeugspindel 2b jeweils entlang paralleler x-Achsen, paralleler y-Achsen und paralleler z-Achsen als jeweilige erste Maschinenachsen beziehungsweise zweite Maschinenachsen bewegbar. Die x-Achsen stehen dabei senkrecht auf den y-Achsen und die z-Achsen stehen senkrecht auf den x-Achsen und den y-Achsen. Es sind jedoch auch andere translatorische Maschinenachsen oder Rotationsachsen möglich.

Die Mehrspindel-Werkzeugmaschine 1 weist eine Steuervorrichtung 4 zur CNC-Steuerung der ersten Werkzeugspindel 2a und der zweiten Werkzeugspindel 2b auf.

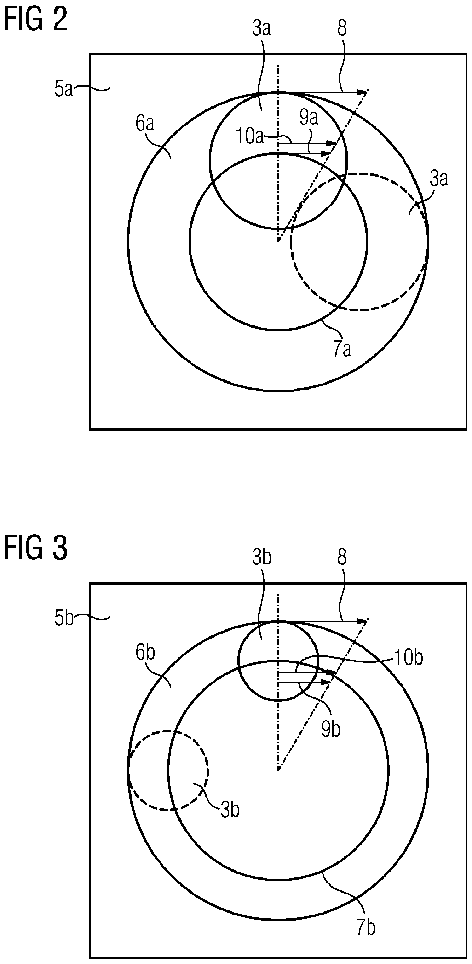

Mittels der erfindungsgemäßen Mehrspindel-Werkzeugmaschine 1 kann insbesondere ein erfindungsgemäßes Verfahren zur CNC-Steuerung einer Mehrspindel-Werkzeugmaschine 1 durchgeführt werden. Zum Bearbeiten eines ersten Werkstücks 5a (siehe FIG 2) mittels des ersten Werkzeugs 3a arbeitet die Steuervorrichtung 4 ein vorgegebenes Teileprogramm in einem ersten Bearbeitungskanal ab und zum Bearbeiten eines zweiten Werkstücks 5b (siehe FIG 3) mittels des zweiten Werkzeugs 3b arbeitet die Steuervorrichtung 4 dasselbe Teileprogramm in einem zweiten Bearbeitungskanal synchronisiert mit der Abarbeitung im ersten Bearbeitungskanal ab.

Dabei steuert die Steuervorrichtung 4 zur Abarbeitung des Teileprogramms in dem ersten Bearbeitungskanal die ersten Maschinenachsen zur Führung der ersten Werkzeugspindel 2a gemäß einer ersten Werkzeugbahn an und steuert zur Abarbeitung des Teileprogramms in dem zweiten Bearbeitungskanal die zweiten Maschinenachsen zur Führung der zweiten Werkzeugspindel gemäß einer zweiten Werkzeugbahn an, wobei ein Bearbeitungsergebnis des ersten Werkstücks 5a an einem Ende der ersten Werkzeugbahn gleich einem Bearbeitungsergebnis des zweiten Werkstücks 5b an einem Ende der zweiten Werkzeugbahn ist.

Die Steuervorrichtung 4 steuert die ersten Maschinenachsen und die zweiten Maschinenachsen derart an, dass eine Zeitdifferenz zwischen einem Erreichen des Endes der ersten Werkzeugbahn und einem Erreichen des Endes der zweiten Werkzeugbahn kleiner oder gleich einem vorgegebenen Grenzwert ist

Beispielsweise erhält die Steuervorrichtung 4 einen Unterschied zwischen ersten Werkzeugabmessungen des ersten Werkzeugs 3a und zweiten Werkzeugabmessungen des zweiten Werkzeugs 3b. Die Steuervorrichtung 4 stellt eine Geschwindigkeitsdifferenz zwischen einer ersten mittleren Bahngeschwindigkeit der ersten Werkzeugbahn und einer zweiten mittleren Bahngeschwindigkeit der zweiten Werkzeugbahn abhängig von dem Unterschied zwischen den ersten Werkzeugabmessungen und den zweiten Werkzeugabmessungen ein.

Das Verfahren wird für beispielhafte Ausführungsformen unter Bezugnahme auf die Figuren FIG 2 bis FIG 5 näher erläutert. Rein exemplarisch wird beispielsweise angenommen, dass mittels eines ersten Fräsers 3a und eines zweiten Fräsers 3b beispielsweise jeweils eine Lochkontur 6a, 6b mit einem Durchmesser von 30 mm und einer Tiefe von 20 mm durch eine Helix mit fünf Umdrehungen gefräst werden soll. Der Radius des ersten Fräsers 3a beträgt dabei beispielsweise 10 mm und ein Radius des zweiten Fräsers 3b beträgt beispielsweise 9 mm. Um die Lochkonturen 6a, 6b in das erste Werkstück 5a beziehungsweise in das zweite Werkstück 5b zu fräsen, ist im Falle des ersten Fräsers 3a daher eine Helix mit einem Radius von 5 mm erforderlich und für das zweite Werkzeug 3b eine Helix mit einem Radius von 5,5 mm. Es sei darauf hingewiesen, dass die Figuren FIG 2 bis FIG 5 dahingehend nicht maßstabsgetreu abgebildet sind. Dies könnte beispielsweise durch ein Teileprogramm für beide Bearbeitungskanälen wie folgt definiert werden oder programmiert werden:
T1D1
G42
G00 X=0 Y=0 Z=0
F10000
G2 l=-15 Z=-20 TURN=5
M30

Daraus resultiert jedoch für die Helix, welche der zweite Fräser 3b abfahren muss, ein längerer Weg von 3,1415 mm pro Umdrehung beziehungsweise 15,7075 mm pro Helix. In diesem Rechenbeispiel entsprechen 15,7075 mm Bahnweg einer halben Kreisfahrt.

In FIG 2 beziehungsweise FIG 3 ist auch die jeweilige Mittelpunktsbahn 7a, 7b des ersten Fräsers 3a beziehungsweise des zweiten Fräsers 3b von oben, also parallel zur Tiefenrichtung, beispielsweise Z, dargestellt. Ferner sind die resultierenden Lochkonturen 6a, 6b dargestellt.

Wie bereits erwähnt wird in beiden Bearbeitungskanälen dasselbe Teileprogramm verwendet, das heißt es sind die identischen Lochkonturen 6a, 6b und identische Vorschübe programmiert, in FIG 2 und FIG 3 als entsprechende Pfeile 9a, 9b gezeigt, deren Länge dem Betrag des programmierten Vorschubs entspricht. Die Lochkonturen 6a, 6b werden durch die unterschiedlichen Mittelpunktsbahnen 7a, 7b erzeugt, welche sich aus dem Radius des jeweiligen Fräsers 3a, 3b ergeben. Des Weiteren hängt der notwendige Vorschub für die Maschinenachsen, in FIG 2 und FIG 3 durch die Pfeile 10a, 10b mit entsprechenden Längen dargestellt, ebenfalls vom Radius des jeweiligen Fräsers 3a, 3b ab. Eine maximale dynamische Grenze für den Vorschub für die Maschinenachsen ist durch einen entsprechenden Pfeil 8 dargestellt.

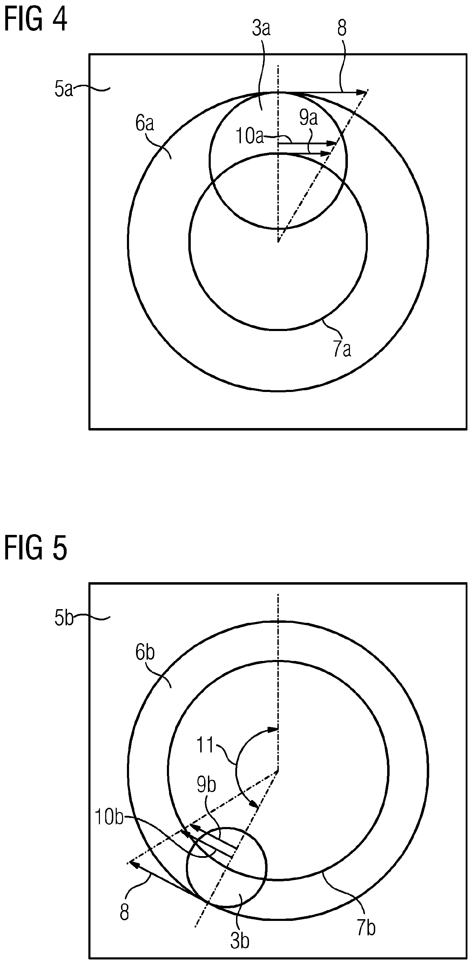

Wenn der Vorschub für die Maschinenachsen, der zur Realisierung des programmierten Vorschubs erforderlich ist, größer ist als der maximal mögliche Vorschub, so käme es ohne die erfindungsgemäße Einstellung der Geschwindigkeitsdifferenz zu einem asynchronen Verhalten. In FIG 2 und FIG 3 befänden sich der erste Fräser 3a und der zweite Fräser 3b zu Beginn der jeweiligen Helix beide auf einer Position bei 12 Uhr, nach einer bestimmten Zeit t1 jedoch auf unterschiedlichen Positionen, beispielsweise 3 Uhr für den ersten Fräser 3a und 9 Uhr für den zweiten Fräser. FIG 4 und FIG 5 zeigen die Positionen der Fräser 3a, 3b bei Abschluss der Helix durch en ersten Fräser 3a, der sich dann wieder auf 12 Uhr befinden würde. Der zweite Fräser 3b wäre dann beispielsweise bei 7 Uhr, sodass sich eine entsprechende Bahndifferenz 11 ergeben würde. Durch die Erfindung kann diese Bahndifferenz 11 reduziert oder verhindert werden.

Die Mehrspindel-Werkzeugmaschine 1 kann eingesetzt werden, um eine sehr hohe Produktivität auf kleinstem Raum zu erzielen. Zusätzlich können die Maschinenachsen der Mehrspindel-Werkzeugmaschine 1 nahe an ihren jeweils vorgegebenen Dynamikgrenzen betrieben werden, wobei durch die Erfindung eine Asynchronität reduziert oder verhindert werden kann und damit die Kollisionsgefahr reduziert werden kann.

Durch verschiedene Ausführungsformen der Erfindung wird eine neue Steuerungsfunktion geschaffen, die es erlaubt, die einzelnen Bahnbewegungen, zum Beispiel Kreise oder Helices, über verschiedene Bearbeitungskanäle hinweg anzugleichen, also insbesondere zwangsweise über die berechnete beziehungsweise vorgegebene vorhandene Bewegungs- und Orientierungskurve der Bahnplanung in der CNC-Steuerung im jeweiligen Bearbeitungskanal zu synchronisieren. Dies erfolgt insbesondere ohne ausdrückliche Vorgabe im Teileprogramm selbst.

In manchen Ausführungsformen kann die Zwangssynchronisierung durch die Reduzierung der Bahngeschwindigkeit oder der Reduzierung der Geschwindigkeit der beteiligten Maschinenachsen in der Bewegung in einem der Bearbeitungskanäle realisiert und somit die Synchronität der beiden Bearbeitungskanäle erreicht. Beispielsweise können weitere Dynamikgrößen der Bahn, also zum Beispiel Bahnbeschleunigung und/oder Bahnruck, und/oder Dynamikgrößen der Maschinenachsen, also beispielsweise Achsbeschleunigung und/oder Achsruck, adaptiert werden, um die Synchronität der beiden Bearbeitungskanäle zu verbessern. Im Beispiel der FIG 2 und FIG 3 würde etwa der Bearbeitungskanal für den ersten Fräser 3a absichtlich gebremst, da dort die Mittelpunktsbahn 7a kürzer ist. In anderen Ausführungsformen kann die Synchronität der beiden Bearbeitungskanäle durch intern erzeugte, also nicht explizit programmierte, Stoppintervalle erreicht werden.

Zur Parametrierung der Steuerungsfunktion kann beispielsweise ein maximaler statischer als Einstellparameter für die Zwangssynchronisierung vorgesehen sein, welcher sich durch den Unterschied in den Werkzeugabmessungen ergibt. Als weiterer Parameter kann ein maximaler dynamischer Abstand vorgesehen sein, welcher sich durch Messungen an den Dynamikgrenzen der unterschiedlichen Werkzeugkorrekturen ergibt.

Die Steuerungsfunktion kann insbesondere bei nominell identischen Werkzeugen mit unterschiedlichen Verschleißzuständen ein Teileprogramm über zwei oder mehrere Bearbeitungskanäle in einfacher Weise synchronisieren. Damit lassen sich hochproduktive Werkzeugmaschinen noch weiter verbessern und optimieren. Die Einführung solch einer Steuerungsfunktion erhöht die Bearbeitungsgeschwindigkeit und die -qualität.

Unabhängig vom grammatikalischen Geschlecht eines bestimmten Begriffes sind Personen mit männlicher, weiblicher oder anderer Geschlechteridentität mit umfasst.

## Patentansprüche

1. Verfahren zur rechnergestützten numerischen Steuerung einer Mehrspindel-Werkzeugmaschine (1), welche eine mit einem ersten Werkzeug (3a, 3b) bestückte erste Werkzeugspindel (2a, 2b) und eine von der ersten Werkzeugspindel (2a, 2b) unabhängig steuerbare und mit einem zweiten Werkzeug (3a, 3b) bestückte zweite Werkzeugspindel (2a, 2b) aufweist, wobei
- ein erstes Werkstück (5a, 5b) mittels des ersten Werkzeugs (3a, 3b) bearbeitet wird, indem ein vorgegebenes Teileprogramm in einem ersten Bearbeitungskanal abgearbeitet wird, und ein zweites Werkstück (5a, 5b) mittels des zweiten Werkzeugs (3a, 3b) bearbeitet wird, indem das Teileprogramm in einem zweiten Bearbeitungskanal synchronisiert mit dem ersten Bearbeitungskanal abgearbeitet wird;
- die Abarbeitung des Teileprogramms in dem ersten Bearbeitungskanal eine Ansteuerung erster Maschinenachsen zur Führung der ersten Werkzeugspindel (2a, 2b) gemäß einer ersten Werkzeugbahn beinhaltet und die Abarbeitung des Teileprogramms in dem zweiten Bearbeitungskanal eine Ansteuerung zweiter Maschinenachsen zur Führung der zweiten Werkzeugspindel (2a, 2b) gemäß einer zweiten Werkzeugbahn beinhaltet, wobei ein Bearbeitungsergebnis des ersten Werkstücks (5a, 5b) an einem Ende der ersten Werkzeugbahn gleich einem Bearbeitungsergebnis des zweiten Werkstücks (5a, 5b) an einem Ende der zweiten Werkzeugbahn ist; und
- die ersten Maschinenachsen und die zweiten Maschinenachsen derart angesteuert werden, dass eine Zeitdifferenz zwischen einem Erreichen des Endes der ersten Werkzeugbahn und einem Erreichen des Endes der zweiten Werkzeugbahn kleiner oder gleich einem vorgegebenen Grenzwert ist.

2. Verfahren nach Anspruch 1, wobei jeweilige Parameterwerte wenigstens eines mechanischen Parameters und/oder wenigstens eines dynamischen Parameters und/oder wenigstens eines Positionsparameters für die erste Werkzeugspindel (2a, 2b) und die zweite Werkzeugspindel (2a, 2b) voneinander unterscheiden.

3. Verfahren nach Anspruch 2, wobei
- der wenigstens eine mechanische Parameter Werkzeugabmessungen des ersten Werkzeugs (3a, 3b) beziehungsweise des zweiten (3a, 3b) Werkzeugs enthält; und/oder
- der wenigstens eine dynamische Parameter einen maximal zulässigen oder möglichen Vorschub der ersten Werkzeugspindel (2a, 2b) beziehungsweise der zweiten Werkzeugspindel (2a, 2b) enthält; und/oder
- der wenigstens eine Positionsparameter eine Nullpunktposition des ersten Werkzeugs (3a, 3b) beziehungsweise des zweiten Werkzeugs (3a, 3b) enthält.

4. Verfahren nach einem der vorhergehenden Ansprüche, wobei eine Geschwindigkeitsdifferenz zwischen einer ersten mittleren Bahngeschwindigkeit der ersten Werkzeugbahn und einer zweiten mittleren Bahngeschwindigkeit der zweiten Werkzeugbahn eingestellt wird, sodass die Zeitdifferenz kleiner oder gleich dem Grenzwert ist.

5. Verfahren nach Anspruch 4 und einem der Ansprüche 2 oder 3, wobei
- die Geschwindigkeitsdifferenz abhängig von den Parameterwerten für die erste Werkzeugspindel (2a, 2b) und die zweite Werkzeugspindel (2a, 2b) berechnet wird;
- jeweilige Achsdynamikgrößen für die ersten Maschinenachsen und die zweiten Maschinenachsen abhängig von der Geschwindigkeitsdifferenz berechnet werden; und
- die Geschwindigkeitsdifferenz eingestellt wird, indem die Ansteuerung der ersten Maschinenachsen und der zweiten Maschinenachsen entsprechend der berechneten jeweiligen Achsdynamikgrößen erfolgt.

6. Verfahren nach Anspruch 4 und einem der Ansprüche 2 oder 3, wobei
- jeweilige Achsdynamikgrößen der ersten Maschinenachsen und der zweiten Maschinenachsen abhängig von den Parameterwerten für die erste Werkzeugspindel (2a, 2b) und die zweite Werkzeugspindel (2a, 2b) berechnet werden; und
- die Geschwindigkeitsdifferenz eingestellt wird, indem die Ansteuerung der ersten Maschinenachsen und der zweiten Maschinenachsen entsprechend der berechneten jeweiligen Achsdynamikgrößen erfolgt.

7. Verfahren nach einem der Ansprüche 5 oder 6, wobei die jeweiligen Achsdynamikgrößen
- jeweilige Achsgeschwindigkeiten der ersten Maschinenachsen und der zweiten Maschinenachsen beinhalten; und/oder
- jeweilige Achsbeschleunigungen der ersten Maschinenachsen und der zweiten Maschinenachsen beinhalten; und/oder
- jeweilige Achsrucke der ersten Maschinenachsen und der zweiten Maschinenachsen beinhalten; und/oder
- einen Achssnap der ersten Maschinenachsen und einen Achssnap der zweiten Maschinenachsen beinhalten.

8. Verfahren nach Anspruch 4 und einem der Ansprüche 2 oder 3, wobei die Geschwindigkeitsdifferenz eingestellt wird, indem abhängig von den Parameterwerten für die erste Werkzeugspindel (2a, 2b) und die zweite Werkzeugspindel (2a, 2b)
- wenigstens ein erstes Stoppintervall bestimmt wird und die erste Werkzeugspindel (2a, 2b) entlang der ersten Werkzeugbahn während des wenigstens einen ersten Stoppintervalls angehalten wird; oder
- wenigstens ein zweites Stoppintervall bestimmt wird und die zweite Werkzeugspindel (2a, 2b) entlang der zweiten Werkzeugbahn während des wenigstens einen zweiten Stoppintervalls angehalten wird.

9. Verfahren nach einem der Ansprüche 2 oder 3, wobei
- eine Beschleunigungsdifferenz zwischen einer ersten Bahnbeschleunigung der ersten Werkzeugbahn und einer zweiten Bahnbeschleunigung der zweiten Werkzeugbahn abhängig von den Parameterwerten für die erste Werkzeugspindel (2a, 2b) und die zweite Werkzeugspindel (2a, 2b) eingestellt wird; und/oder
- eine Ruckdifferenz zwischen einem ersten Bahnruck der ersten Werkzeugbahn und einem zweiten Bahnruck der zweiten Werkzeugbahn abhängig von den Parameterwerten für die erste Werkzeugspindel (2a, 2b) und die zweite Werkzeugspindel (2a, 2b) eingestellt wird; und/oder
- eine Snapdifferenz zwischen einem ersten Bahnsnap der ersten Werkzeugbahn und einem zweiten Bahnsnap der zweiten Werkzeugbahn abhängig von den Parameterwerten für die erste Werkzeugspindel (2a, 2b) und die zweite Werkzeugspindel (2a, 2b) eingestellt wird.

10. Verfahren nach einem der vorhergehenden Ansprüche, wobei für das das erste Werkstück (5a, 5b) und das zweite Werkstück (5a, 5b) identische Soll-Maße vorgegeben werden und das Teileprogramm gemäß den Soll-Maßen vorgegeben wird.

11. Verfahren nach Anspruch 3, wobei die Werkzeugabmessungen des ersten Werkzeugs (3a, 3b) und/oder des zweiten Werkzeugs (3a, 3b) mittels wenigstens einer Messvorrichtung der Mehrspindel-Werkzeugmaschine (1) gemessen werden.

12. Mehrspindel-Werkzeugmaschine (1) aufweisend eine mit einem ersten Werkzeug (3a, 3b) bestückbare erste Werkzeugspindel (2a, 2b), eine von der ersten Werkzeugspindel (2a, 2b) unabhängig steuerbare und
mit einem zweiten Werkzeug (3a, 3b) bestückbare zweite Werkzeugspindel (2a, 2b), sowie eine Steuervorrichtung (4), die zur rechnergestützten numerischen Steuerung der ersten Werkzeugspindel (2a, 2b) und der zweiten Werkzeugspindel (2a, 2b) eingerichtet ist und dazu eingerichtet ist,
- zum Bearbeiten des ersten Werkstücks (5a, 5b) mittels des ersten Werkzeugs (3a, 3b) ein vorgegebenes Teileprogramm in einem ersten Bearbeitungskanal abzuarbeiten und zum Bearbeiten des zweiten Werkstücks (5a, 5b) mittels des zweiten Werkzeugs (3a, 3b) das Teileprogramm in einem zweiten Bearbeitungskanal synchronisiert mit dem ersten Bearbeitungskanal abzuarbeiten;
- zur Abarbeitung des Teileprogramms in dem ersten Bearbeitungskanal erste Maschinenachsen zur Führung der ersten Werkzeugspindel (2a, 2b) gemäß einer ersten Werkzeugbahn anzusteuern und zur Abarbeitung des Teileprogramms in dem zweiten Bearbeitungskanal zweite Maschinenachsen zur Führung der zweiten Werkzeugspindel (2a, 2b) gemäß einer zweiten Werkzeugbahn anzusteuern, wobei ein Bearbeitungsergebnis des ersten Werkstücks (5a, 5b) an einem Ende der ersten Werkzeugbahn gleich einem Bearbeitungsergebnis des zweiten Werkstücks (5a, 5b) an einem Ende der zweiten Werkzeugbahn ist; und
- die ersten Maschinenachsen und die zweiten Maschinenachsen derart anzusteuern, dass eine Zeitdifferenz zwischen einem Erreichen des Endes der ersten Werkzeugbahn und einem Erreichen des Endes der zweiten Werkzeugbahn kleiner oder gleich einem vorgegebenen Grenzwert ist.

13. Computerprogramm aufweisend Befehle, die bei Ausführung durch die Steuervorrichtung (4) einer Mehrspindel-Werkzeugmaschine (1) gemäß Anspruch 12 die Mehrspindel-Werkzeugmaschine (1) dazu veranlassen, ein Verfahren nach einem der Ansprüche 1 bis 11 durchzuführen.

14. Computerlesbares Speichermedium, welches ein Computerprogramm nach Anspruch 13 speichert.
